# EUROPÄISCHE PATENTSCHRIFT

(11) **EP 4 238 403 B1**
(45) Veröffentlichungstag und Bekanntmachung des Hinweises auf die Patenterteilung: **30.04.2025**
(21) Anmeldenummer: 23153483.5
(22) Anmeldetag: 26.01.2023
(51) Int. Cl.: A01B 69/00, A01B 69/04, G06K 19/00

(54) **NAVIGATION EINER LANDWIRTSCHAFTLICHEN ARBEITSMASCHINE**
NAVIGATION OF AN AGRICULTURAL MACHINE
NAVIGATION D'UNE MACHINE DE TRAVAIL AGRICOLE

(30) Priorität: 01.03.2022 DE 102022104837
(43) Veröffentlichungstag der Anmeldung: 06.09.2023
(73) Patentinhaber: CLAAS E-Systems GmbH, 49201 Dissen (DE)
(72) Erfinder: JOHANN TO BÜREN, Gerald, 49205 Hasbergen (DE); HOEKE, Oliver, 32257 Bünde (DE)
(74) Vertreter: CLAAS Gruppe

(56) Entgegenhaltungen:
- DE-A1- 102010 053 331
- DE-A1- 102019 204 241
- US-A1- 2019 174 560
- BAYNHAM FELIX: "How to Share and Check Locations Using Google Maps QR Code", 18 September 2020 (2020-09-18), XP093060812, Retrieved from the Internet <URL:https://web.archive.org/web/20200918111248/https://www.virtuallocation.com/android-location/scan-barcode-google-maps.html> [retrieved on 20230704]

## Beschreibung

Die vorliegende Erfindung betrifft ein Verfahren zur Navigation einer landwirtschaftlichen Arbeitsmaschine und ein System zur Navigation.

Landwirtschaftliche Arbeitsmaschinen verfügen heute zumeist nicht über ein eigenes Navigationsgerät und zeigen allenfalls Zielkoordinaten in Form von GPS-Koordinaten an, sodass ein Fahrer der landwirtschaftlichen Arbeitsmaschine diese GPS-Koordinaten in ein mobiles Navigationsgerät eintippen muss, wie etwa aus DE102010053331A1 bekannt geworden. Dieses Eintippen der GPS-Koordinaten ist zeitaufwändig und insbesondere fehleranfällig, sodass der geplante Betrieb der landwirtschaftlichen Arbeitsmaschine bei einer Falschübernahme der GPS-Koordinaten zeittechnisch, arbeitstechnisch als auch bezüglich des Kraftstoffverbrauches nachteilig ist. Insbesondere neue Fahrer oder Aushilfsfahrer werden hierdurch sehr stark belastet.

Der vorliegenden Erfindung liegt die Aufgabe zugrunde, eine verbesserte oder zumindest eine alternative Ausführungsform eines Verfahren zur Navigation einer landwirtschaftlichen Arbeitsmaschine und eines Systems zur Navigation anzugeben, wobei insbesondere eine Verringerung des Zeitaufwandes und/oder der Fehleranfälligkeit bereitgestellt wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass die landwirtschaftliche Arbeitsmaschine ein optisches Muster mit einer Navigations-Information bereitstellt. Die Navigations-Information kann wenigstens eine Information für eine Satelliten basierte Navigation, insbesondere eine GPS basierte Navigation, und/oder eine Funk basierte Navigation und/oder eine GSM basierte Navigation aufweisen. Die Navigations-Information kann GPS-Koordinaten umfassen.

Das erfindungsgemäße Verfahren zur Navigation der landwirtschaftlichen Arbeitsmaschine sieht vor, dass die landwirtschaftliche Arbeitsmaschine das optische Muster mit der Navigations-Information bereitstellt und ein mobiles Navigationsgerät dieses optische Muster, insbesondere optisch, erfasst. Das mobile Navigationsgerät ist derart ausgebildet und/oder programmiert, dass aus dem erfassten optischen Muster die Navigations-Information ermittelt und basierend auf dieser Navigations-Information eine Navigations-Routine zur Zielführung initiiert wird. Die Verwendung des optischen Musters mit einer Navigations-Information ermöglicht ein einfaches maschinenlesbares Bereitstellen der Navigations-Information, sodass die Initiierung der Navigations-Routine zur Zielführung mit einem geringen Zeitaufwand und geringerer Fehleranfälligkeit ausgeführt werden kann.

Die Navigations-Routine kann zur Zielführung des Fahrers der landwirtschaftlichen Arbeitsmaschine optische und/oder akustische Navigation-Signale mittels des mobiles Navigationsgerätes erzeugen. Es kann vorgesehen sein, dass bei der Initiierung dem Fahrer mittels des mobilen Navigationsgerätes ein ermitteltes Routenziel, insbesondere dessen Zielkoordinaten, angezeigt werden und der Fahrer befragt wird, ob dieser mit dem ermittelten Routenziel einverstanden ist. Falls der Fahrer das ermittelte Routenziel dem mobilen Navigationsgerät haptisch und/oder akustisch bestätigt, erfolgt die Zielführung des Fahrers der landwirtschaftlichen Arbeitsmaschine mittels der Navigations-Routine. Die Navigations-Routine kann hierfür ein Navigations-Verfahren, insbesondere ein computerimplementiertes Navigations-Verfahren und/oder eine Navigations-App, aufweisen.

Bei einer vorteilhaften Weiterbildung der erfindungsgemäßen Lösung ist vorgesehen, dass die Navigations-Information Zielkoordinaten bezüglich einer landwirtschaftlichen Fläche und/oder eines landwirtschaftlichen Feldstückes und/oder eines landwirtschaftlichen Feldortes umfasst. Hierdurch kann der Fahrer die landwirtschaftliche Arbeitsmaschine mit optimiertem Zeitaufwand und vermiedener Fehleranfälligkeit zur landwirtschaftlichen Zielbereich führen. Die Navigations-Routine kann den Fahrer der landwirtschaftlichen Arbeitsmaschine ausgehend von der aktuellen Position des mobilen Navigationsgerätes zur Zielkoordinate, insbesondere mittels optischer und/oder akustischer Navigations-Signale, führen.

Es kann vorgesehen sein, dass die Navigations-Information alternativ oder zusätzlich Informationen bezüglich eines Schlags und/oder eines Fahrers und/oder der Arbeitsmaschine und/oder eines Anbaugerätes und/oder eines Mittels aufweist. Das Mittel kann ein landwirtschaftliches Mittel sein, welches auf den Schlag und/oder Pflanzen des Schlags ausgebracht werden soll. Die Navigations-Information kann insbesondere eine ID und/oder einen Namen des Schlags, eine ID und/oder einen Namen des Fahrers, eine ID und/oder einen Namen des Anbaugeräts und/oder eine ID und/oder einen Namen des Mittels umfassen. Ein Name kann eine Bezeichnung sein. Alternativ oder zusätzlich kann die Navigations-Information eine Telefonnummer, insbesondere eine Service-Telefonnummer, umfassen. Durch die Service-Telefonnummer kann das Navigationsgerät beispielsweise dem Fahrer einen dahingehenden Hinweis anzeigen, dass der Fahrer die Service-Telefonnummer kontaktieren soll. Alternativ oder zusätzlich kann die Navigations-Information einen Diagnostic Trouble Code (DTC) umfassen. Durch den Diagnostic Trouble Code kann das Navigationsgerät beispielweise dem Fahrer einen Hinweis bezüglich relevanter Informationen bezüglich einer Fehlermeldung anzeigen. Bei einer vorteilhaften Weiterbildung der erfindungsgemäßen Lösung ist vorgesehen, dass das mobile Navigationsgerät eine Satelliten basierte Positionsbestimmung, insbesondere eine GPS basierte Positionsbestimmung, und/oder eine Funk basierte Positionsbestimmung und/oder eine GSM basierte Positionsbestimmung zur Zielführung verwendet.

Bei einer vorteilhaften Weiterbildung der erfindungsgemäßen Lösung ist vorgesehen, dass das optische Muster ein QR-Code und/oder ein Barcode ist. Diese optischen Muster haben den Vorteil, dass sie gut maschinenlesbar sind und zudem relativ viele Informationen aufnehmen können.

Bei einer vorteilhaften Weiterbildung der erfindungsgemäßen Lösung ist vorgesehen, dass die landwirtschaftliche Arbeitsmaschine ein Fahrerassistenzsystem mit einem Display, insbesondere einem Touchscreen, aufweist, wobei das Fahrerassistenzsystem das optische Muster bereitstellt und das optische Muster auf dem Display angezeigt wird. Mit dem Fahrerassistenzsystem können beispielsweise Arbeitsaggregate der landwirtschaftlichen Arbeitsmaschine über Arbeitsaggregateinstellungen geregelt oder gesteuert werden. Dies können insbesondere interne Arbeitsaggregate, wie beispielsweise ein Dreschwerk, aber auch externe Arbeitsaggregate, beispielsweise Anbaugeräte, sein.

Bei einer vorteilhaften Weiterbildung der erfindungsgemäßen Lösung ist vorgesehen, dass das Navigationsgerät eine Kamera aufweist, mit welcher das Navigationsgerät das optische Muster erfasst. Hierdurch können ausreichend Informationen ohne eine aufwendige Eingabe des Fahrers der landwirtschaftlichen Arbeitsmaschine erzielt werden.

Bei einer vorteilhaften Weiterbildung der erfindungsgemäßen Lösung ist vorgesehen, dass das Navigationsgerät ein Mobiltelefon, insbesondere ein Smartphone, ist, welches die Navigations-Routine zur Zielführung ausführt. Das Navigationsgerät, insbesondere das Mobiltelefon und/oder das Smartphone, kann eine Navigation-Applikation aufweisen. Das Navigationsgerät, insbesondere das Mobiltelefon und/oder das Smartphone, kann dazu ausgebildet und/oder programmiert sein, bei der Initiierung der Navigations-Routine die Navigations-Information an die Navigation-Applikation zu übermitteln, wobei anschließend die Navigation-Applikation die Navigation ausführt. Das Navigationsgerät, insbesondere das Mobiltelefon und/oder das Smartphone, kann neben der Navigation-Applikation wenigstens eine weitere Applikation aufweisen. Das Navigationsgerät, insbesondere das Mobiltelefon und/oder das Smartphone, kann dazu ausgebildet und/oder programmiert sein, vor und/oder während und/oder nach der Initiierung der Navigations-Routine beispielsweise die zusätzlichen Informationen bezüglich des Schlags und/oder des Fahrers und/oder der Arbeitsmaschine und/oder des Anbaugerätes und/oder des Mittels an die wenigstens eine weitere Applikation zu übermitteln.

Ferner betrifft die Erfindung ein System zur Navigation, insbesondere unter Anwendung des hier aufgeführten Verfahrens, aufweisend eine landwirtschaftlichen Arbeitsmaschine und ein mobiles Navigationsgerät, wobei die landwirtschaftliche Arbeitsmaschine ein optisches Muster mit einer Navigations-Information bereitstellt, welches mit dem mobilen Navigationsgerät erfasst wird, und dass basierend auf der Navigations-Information im optischen Muster eine Navigations-Routine zur Zielführung der landwirtschaftlichen Arbeitsmaschine ausgeführt wird.

Bei einer vorteilhaften Weiterbildung der erfindungsgemäßen Lösung ist vorgesehen, dass das Navigationsgerät ein Mobiltelefon, insbesondere ein Smartphone, ist. Das Navigationsgerät, insbesondere das Mobiltelefon und/oder das Smartphone, kann eine Navigation-Applikation aufweisen. Das Navigationsgerät, insbesondere das Mobiltelefon und/oder das Smartphone, kann dazu ausgebildet und/oder programmiert sein, bei der Initiierung der Navigations-Routine die Navigations-Information an die Navigation-Applikation zu übermitteln, wobei anschließend die Navigation-Applikation die Navigation ausführt.

Bei einer vorteilhaften Weiterbildung der erfindungsgemäßen Lösung ist vorgesehen, dass die landwirtschaftliche Arbeitsmaschine ein selbstfahrender Mähdrescher, ein selbstfahrender Feldhäcksler oder ein Traktor ist.

Bei einer vorteilhaften Weiterbildung der erfindungsgemäßen Lösung ist vorgesehen, dass die landwirtschaftliche Arbeitsmaschine eine Fahrerkabine aufweist, wobei in der Fahrerkabine wenigstens ein Display zur Anzeige des optischen Musters ausgebildet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine erfindungsgemäße landwirtschaftliche Arbeitsmaschine, und
- Fig. 2: ein Fahrerassistenzsystem aus Fig. 1.

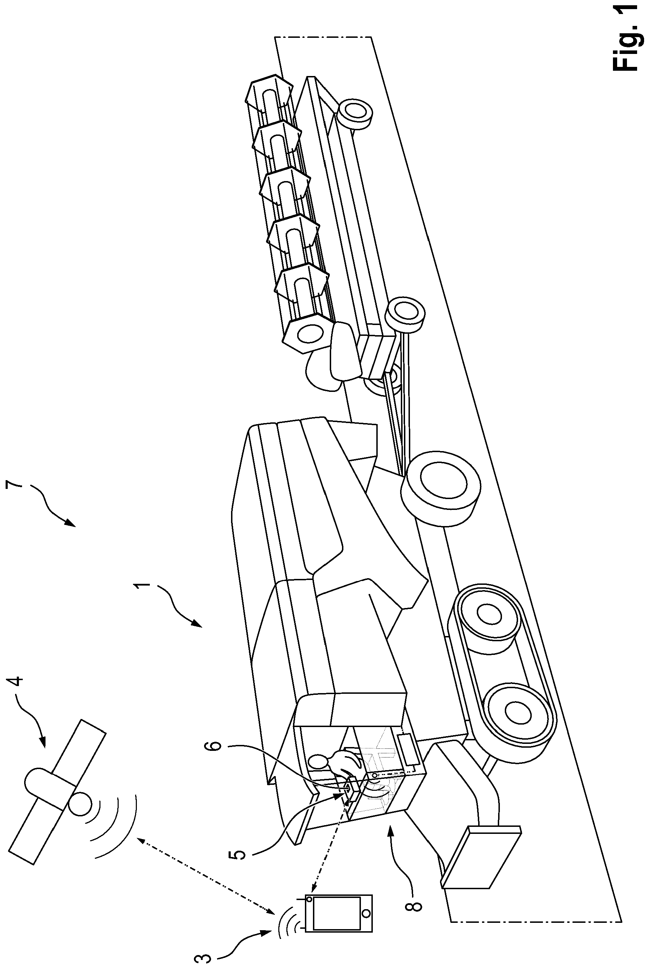

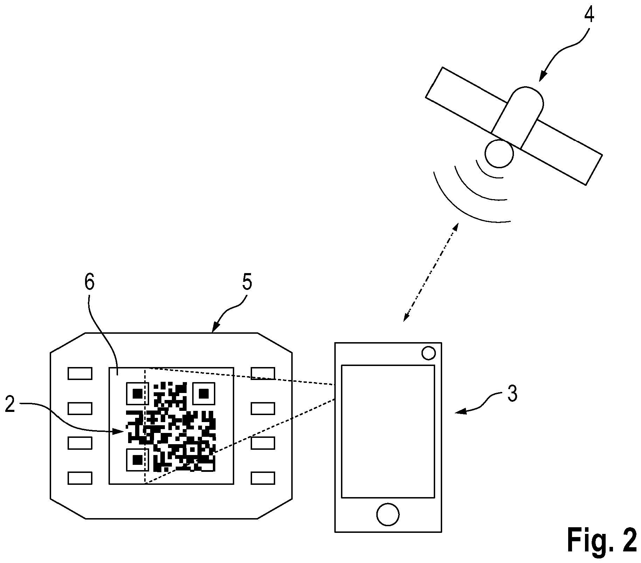

Die Fig. 1 zeigt eine selbstfahrende landwirtschaftliche Arbeitsmaschine 1, die beispielsweise als selbstfahrender Mähdrescher ausgebildet ist. Die landwirtschaftliche Arbeitsmaschine 1 hat eine Kabine 8, in der ein Fahrer die landwirtschaftliche Arbeitsmaschine 1 steuern kann. Innerhalb der Kabine 8 ist ein Fahrerassistenzsystem 5 mit einem Display 6 vorhanden. Dieses Display 6 ist in der Fig. 2 detaillierter dargestellt.

Die landwirtschaftliche Arbeitsmaschine 1 stellt mittels des Displays 6 ein optisches Muster 2 mit einer Navigations-Information bereit. Der Fahrer kann dieses optische Muster 2 mit einem mobilen Navigationsgerät 3 erfassen. Das Navigationsgerät 3 ermittelt aus dem erfassten optischen Muster 2 die Navigations-Information und initiiert eine Navigations-Routine zur Zielführung. Mit anderen Worten ausgedrückt, der Fahrer wird mittels des mobilen Navigationsgerätes 3 zu einem Ziel, welches in der Navigations-Information enthalten ist, navigiert. Die Navigations-Information kann Zielkoordinaten bezüglich einer landwirtschaftlichen Fläche und/oder eines landwirtschaftlichen Feldstückes und/oder eines landwirtschaftlichen Feldortes aufweisen.

Für die Navigation des Fahrers verbindet sich das mobile Navigationsgerät 3 mit einem Satelliten 4, um den Fahrer der landwirtschaftlichen Arbeitsmaschine 1 ausgehend von der aktuellen Position des mobilen Navigationsgerätes 3 zur Zielkoordinate, insbesondere mittels optischer und/oder akustischer Navigations-Signale, zu führen. Wie in der Fig. 1 angedeutet, wird somit ein System 7 zur Navigation des Fahrers ausgebildet. Hierdurch wird der Fahrer der landwirtschaftlichen Arbeitsmaschine 1 in der Fig. 1 beispielsweise entlang einer Straße zu einem gesuchten Schlag geführt.

### Bezugszeichenliste

- 1: landwirtschaftliche Arbeitsmaschine
- 2: Muster
- 3: mobiles Navigationsgerät
- 4: Satellit
- 5: Fahrerassistenzsystem
- 6: Display
- 7: System
- 8: Kabine

## Patentansprüche

1. Verfahren zur Navigation einer landwirtschaftlichen Arbeitsmaschine (1),
**dadurch gekennzeichnet,**
- **dass** die landwirtschaftlichen Arbeitsmaschine (1) ein optisches Muster (2) mit einer Navigations-Information bereitstellt, und
- **dass** ein mobiles Navigationsgerät (3) das optische Muster (2) erfasst und aus dem erfassten optischen Muster (2) die Navigations-Information ermittelt und basierend auf dieser Navigations-Information eine Navigations-Routine zur Zielführung initiiert.

2. Verfahren nach Anspruch 1,
**dadurch gekennzeichnet,**
**dass** die Navigations-Information Zielkoordinaten bezüglich einer landwirtschaftlichen Fläche und/oder eines landwirtschaftlichen Feldstückes und/oder eines landwirtschaftlichen Feldortes umfasst.

3. Verfahren nach Anspruch 1 oder 2,
**dadurch gekennzeichnet,**
**dass** das mobile Navigationsgerät (3) eine Satelliten (4) basierte Positionsbestimmung, insbesondere eine GPS basierte Positionsbestimmung, und/oder eine Funk basierte Positionsbestimmung und/oder eine GSM basierte Positionsbestimmung zur Zielführung verwendet.

4. Verfahren nach einem der vorhergehenden Ansprüche,
**dadurch gekennzeichnet,**
**dass** das optische Muster (2) ein QR-Code und/oder ein Barcode ist.

5. Verfahren nach einem der vorhergehenden Ansprüche,
**dadurch gekennzeichnet,**
**dass** die landwirtschaftliche Arbeitsmaschine ein Fahrerassistenzsystem (5) mit einem Display (6) aufweist, wobei das Fahrerassistenzsystem (5) das optische Muster (2) bereitstellt und das optische Muster (2) auf dem Display (6) angezeigt wird.

6. Verfahren nach einem der vorhergehenden Ansprüche,
**dadurch gekennzeichnet,**
**dass** das Navigationsgerät (3) eine Kamera aufweist, mit welcher das Navigationsgerät (3) das optische Muster erfasst.

7. Verfahren nach einem der vorhergehenden Ansprüche,
**dadurch gekennzeichnet,**
**dass** das Navigationsgerät (3) ein Mobiltelefon, insbesondere ein Smartphone, ist, welches die Navigations-Routine zur Zielführung ausführt.

8. System (7) zur Navigation, unter Anwendung eines Verfahrens nach einem der vorhergehenden Ansprüche, eine landwirtschaftlichen Arbeitsmaschine (1) und ein mobiles Navigationsgerät (3) umfassend,
**dadurch gekennzeichnet,**
**dass** die landwirtschaftliche Arbeitsmaschine (1) eingerichtet ist, ein optisches Muster (2) mit einer Navigations-Information bereitzustellen, welches mit dem mobilen Navigationsgerät (3) erfasst wird, und dass basierend auf der Navigations-Information im optischen Muster (2) eine Navigations-Routine zur Zielführung der landwirtschaftlichen Arbeitsmaschine (1) ausgeführt wird.

9. System (7) nach Anspruch 8,
**dadurch gekennzeichnet,**
**dass** das Navigationsgerät ein Mobiltelefon, insbesondere ein Smartphone, ist.

10. System (7) nach Anspruch 8 oder 9,
**dadurch gekennzeichnet,**
**dass** die landwirtschaftliche Arbeitsmaschine ein selbstfahrender Mähdrescher, ein selbstfahrender Feldhäcksler oder ein Traktor ist.

11. System (7) nach einem der Ansprüche 8 bis 10,
**dadurch gekennzeichnet,**
**dass** die landwirtschaftliche Arbeitsmaschine eine Fahrerkabine aufweist, wobei in der Fahrerkabine wenigstens ein Display zur Anzeige des optischen Musters ausgebildet ist.

## Claims

1. A method for navigating an agricultural working machine (1), **characterized in that**
- the agricultural working machine (1) provides an optical pattern (2) with navigation information, and
- a mobile navigation device (3) detects the optical pattern (2) and determines the navigation information from the detected optical pattern (2) and initiates a navigation routine for route guidance based on this navigation information.

2. The method according to claim 1,
**characterized in that**
the navigation information comprises target coordinates relative to an agricultural area and/or to a piece of an agricultural field and/or to an agricultural field site.

3. The method according to claim 1 or claim 2,
**characterized in that**
the mobile navigation device (3) uses positioning determination based on a satellite (4), in particular GPS-based positioning determination, and/or radio-based positioning determination and/or GSM-based positioning determination for the route guidance.

4. The method according to one of the preceding claims,
**characterized in that**
the optical pattern (2) is a QR code and/or a barcode.

5. The method according to one of the preceding claims,
**characterized in that**
the agricultural working machine has a driver assistance system (5) with a display (6), wherein the driver assistance system (5) provides the optical pattern (2) and the optical pattern (2) is displayed on the display (6).

6. The method according to one of the preceding claims,
**characterized in that**
the navigation device (3) has a camera, with which the navigation device (3) detects the optical pattern.

7. The method according to one of the preceding claims,
**characterized in that**
the navigation device (3) is a mobile telephone, in particular a smart phone, which executes the navigation routine for route guidance.

8. A system (7) for navigating an agricultural working machine (1) by application of a method according to one of the preceding claims, and comprising a mobile navigation device (3),
**characterized in that**
the agricultural working machine (1) is configured to provide an optical pattern (2) with navigation information, which is detected with the mobile navigation device (3), and **in that**, based on the navigation information in the optical pattern (2), a navigation routine for route guidance of the agricultural working machine (1) is executed.

9. The system (7) according to claim 8,
**characterized in that**
the navigation device is a mobile telephone, in particular a smart phone.

10. The system (7) according to claim 8 or claim 9,
**characterized in that**
the agricultural working machine is a self-propelled combine harvester, a self-propelled forage harvester or a tractor.

11. The system (7) according to one of claims 8 to 10,
**characterized in that**
the agricultural working machine has a driver's cab, wherein at least one display for displaying the optical pattern is constructed in the driver's cab.

## Revendications

1. Procédé de navigation d'une machine de travail agricole (1), **caractérisé en ce que**
- la machine de travail agricole (1) fournit un motif optique (2) avec une information de navigation, et
- **en ce qu'**un appareil de navigation mobile (3) recueille le motif optique (2) et détermine l'information de navigation à partir du motif optique (2) recueilli et, sur la base de cette information de navigation, initialise une routine de navigation en vue du guidage.

2. Procédé selon la revendication 1,
**caractérisé en ce que**
l'information de navigation comprend des coordonnées cibles concernant une surface agricole et/ou une parcelle de champ agricole et/ou un emplacement de champ agricole.

3. Procédé selon la revendication 1 ou 2,
**caractérisé en ce que**
l'appareil de navigation mobile (3) utilise pour le guidage une détermination de position basée sur un satellite (4), notamment une détermination de position basée sur un GPS, et/ou une détermination de position basée sur une liaison radio et/ou une détermination de position basée sur un GSM.

4. Procédé selon une des revendications précédentes,
**caractérisé en ce que**
le motif optique (2) est un QR-code et/ou un code à barres.

5. Procédé selon une des revendications précédentes,
**caractérisé en ce que**
la machine de travail agricole présente un système d'assistance au conducteur (5) doté d'un dispositif d'affichage (6), ledit système d'assistance au conducteur (5) fournissant le motif optique (2), et le motif optique (2) étant visualisé sur le dispositif d'affichage (6).

6. Procédé selon une des revendications précédentes,
**caractérisé en ce que**
l'appareil de navigation (3) présente une caméra avec laquelle l'appareil de navigation (3) détecte le motif optique (2).

7. Procédé selon une des revendications précédentes,
**caractérisé en ce que**
l'appareil de navigation (3) est un téléphone mobile, notamment un smartphone, qui exécute la routine de navigation en vue du guidage.

8. Système (7) de navigation, utilisant un procédé selon une des revendications précédentes, comprenant une machine de travail agricole (1) et un appareil de navigation mobile (3),
**caractérisé en ce que**
la machine de travail agricole (1) est conçue pour fournir un motif optique (2) avec une information de navigation, qui est recueilli avec l'appareil de navigation mobile (3), et **en ce qu'**une routine de navigation est exécutée pour le guidage de la machine de travail agricole (1), sur la base de l'information de navigation dans le motif optique (2).

9. Système (9) selon la revendication 8,
**caractérisé en ce que**
l'appareil de navigation est un téléphone mobile, en particulier un smartphone.

10. Système (7) selon la revendication 8 ou 9,
**caractérisé en ce que**
la machine de travail agricole est une moissonneuse-batteuse automotrice, une récolteuse-hacheuse-chargeuse automotrice ou un tracteur.

11. Système (7) selon une des revendications 8 à 10,
**caractérisé en ce que**
la machine de travail agricole présente une cabine de conducteur, au moins un dispositif d'affichage étant réalisé dans la cabine de conducteur aux fins de visualisation du motif optique.
